(19) Europäisches Patentamt
European Patent Office
Office européen des brevets

(11) **EP 0 693 451 B1**

(12) **EUROPÄISCHE PATENTSCHRIFT**

(45) Veröffentlichungstag und Bekanntmachung des Hinweises auf die Patenterteilung:
**28.10.1998 Patentblatt 1998/44**

(51) Int. Cl.$^6$: **B65H 63/00**, G01N 21/89

(21) Anmeldenummer: **95110161.7**

(22) Anmeldetag: **29.06.1995**

(54) **Verfahren zur optischen Vermessung der Spulenoberfläche von Fadenspulen**

Procedure for optically measuring the surface quality yarn bobbing

Procédé pour mesurer optiquement l'état de la surface de bobines de fil

(84) Benannte Vertragsstaaten:
**CH DE ES FR GB IT LI**

(30) Priorität: **11.07.1994 DE 4424038**

(43) Veröffentlichungstag der Anmeldung:
**24.01.1996 Patentblatt 1996/04**

(73) Patentinhaber: **B a r m a g AG**
**D-42897 Remscheid (DE)**

(72) Erfinder:
• **Berger, Gerald**
**D-42109 Wuppertal (DE)**
• **Oulabi, Jörg**
**D-42399 Wuppertal (DE)**

(74) Vertreter:
**Kahlhöfer, Hermann, Dipl.-Phys. et al**
**Patent- und Rechtsanwälte**
**Bardehle,Pagenberg,Dost,Altenburg,**
**Geissler,Isenbruck**
**Uerdinger Str. 5**
**40474 Düsseldorf (DE)**

(56) Entgegenhaltungen:
EP-A- 0 583 092         DE-A- 3 941 008
DE-A- 4 216 729         US-A- 5 315 366
US-I- T 861 056

**Beschreibung**

Die Erfindung betrifft ein Verfahren zur optischen Vermessung der Spulenoberfläche von Fadenspulen.

Durch die EP 0 583 092 A1 ist ein Verfahren zur optischen Vermessung einer Oberfläche eines zylinderförmigen Teils bekannt. Bei einem solchen zylinderförmigen Teil handelt es sich um einen Brennstoffpellet für ein Kernkraftwerk. Durch die optische Vermessung der Oberfläche des Brennstoffpellets sollen Oberflächenveränderungen, bei denen es sich beispielsweise um Risse handeln kann, bestimmt werden. Hierzu wird nach der EP 0 583 092 A1 vorgeschlagen, daß ein Lichtstrahl auf die Oberfläche des rotierenden Brennstoffpellets emittiert. Der von der Oberfläche des Brennstoffpellets relektierte Lichtstrahl wird detektiert und durch eine Auswerteeinrichtung ausgewertet. Die so gewonnenen Daten geben eine Auskunft über die Oberflächenbeschaffenheit des Brennstoffpellets. Die gemessene Ist-Oberfläche wird mit einer vorgebenen Soll-Oberfläche verglichen. Bei diesen Verfahren wird davon ausgegangen, daß die Reflektionseigenschaft der Oberfläche des Brennstoffpellets stets gleich ist.

Verschiedene Verfahren zur optischen Vermessung der Spulenoberfläche von Fadenspulen sind aus der Deutschen Offenlegungsschrift DE 42 11 985 A1 und der US-A-5 315 366 bekannt. Darin wird zum einen ein Verfahren vorgeschlagen, bei dem die zu untersuchenden Spulen mit Saugluft beaufschlagt werden wahrend sie auf Spulenträgern zu mehreren Spulenprüfeinrichtungen zur Prüfung der Form der Wicklungen der Spulen transportiert werden. Die dabei verwendeten Wicklungsform-Prüfeinrichtungen sind in einer Dunkelkammer angeordnet. Im einzelnen sind in der Dunkelkammer folgende Prüfeinrichtungen angeordnet:

Über der oberen Stirnseite der Spule:

1. eine Faltenprüfeinrichtung zum Prüfen des Vorhandenseins oder Nichtvorhandenseins von Falten,
2. eine Prüfeinrichtung zum Prüfen des Vorhandenseins oder Nichtvorhandenseins eines quer über die Stirnfläche verlaufenden Fadenabschnitts,
3. eine Prüfeinrichtung zum Prüfen des Vorhandenseins oder Nichtvorhandenseins einer Streifen- bzw. Bandenwicklung,
4. eine Prüfeinrichtung zum Prüfen von verschiedenen Fadenarten; an der unteren Stirnfläche der Spule:
5. eine Prüfeinrichtung für quer über die Stirnfläche verlaufende Fadenabschnitte im äußeren Umfang,
6. eine Prüfeinrichtung für quer über die Stirnfläche verlaufende Fadenabschnitte im inneren Umfang.

Des weiteren wird in der DE 42 11 985 A1 ein Verfahren vorgeschlagen, bei dem Licht auf eine Oberfläche einer Spule aufgestrahlt und das von der Oberfläche reflektierte Licht von einer Licht aufnehmenden Einrichtung aufgenommen wird. Die erhaltenen Daten werden in einer Analysiereinrichtung analysiert. Vor diesem Spulenschritt ist ein Saugkopf angeordnet, der auf die Oberfläche der Spule einen Saugluftstrom wirken läßt.

Schließlich ist aus der DE 42 11 985 A1 ein Verfahren bekannt, bei dem Licht in radialer Richtung auf eine Stirnfläche einer zu untersuchenden Spule gestrahlt wird, während die Spule von einer Trageinrichtung gedreht wird. Dabei soll ein linearer CCD-Sensor dasjenige Licht erfassen, das von quer über die Stirnfläche der Spule verlaufenden Abschnitten und von sich überlagernden Fadenabschnitten reflektiert wird. Die von dem linearen CCD-Sensor abgegebenen, aus der Drehung der Spule resultierenden Daten werden von einer Binärkodierschaltung binärkodiert und in einer Berechnungsschaltung weiterverarbeitet, wobei die Berechnungsschaltung die Gestalt einer parabelförmigen Kurve, die über die binärkodierte Schaltung erfaßt wurde, berechnet und den berechneten Wert an eine Vergleichsschaltung zum Vergleichen dieses Wertes mit einem vorgegebenen Wert übergibt.

Die in der DE 42 11 985 A1 vorgeschlagenen Verfahren mögen für Spulen aus Naturgarn geeignet sein, zumal der bei der Herstellung Bearbeitung dieser Garne auftretende Faserflug durch den Saugluftstrom daran gehindert wird, die bei diesem Verfahren zum Einsatz kommenden optischen Spulenprüfeinrichtungen zu verschmutzen. Die Verfahren haben jedoch verschiedene Nachteile. So sind zum einen zur Vermessung der Spulenoberfläche mehrere (bis zu sechs) Prüfeinrichtungen notwendig. Dies macht das Verfahren teuer und aufwendig.

Alle in der DE 42 11 985 A1 vorgeschlagenen optischen Vermessungsverfahren beruhen auf der Messung der Stärke des reflektierten Lichtes. Dabei hofft man, durch geschicktes Beleuchten von den quer über die Stirnfläche verlaufenden Fadenabschnitten eine besonders starke Reflexion zu erhalten. Solche quer zur Stirnfläche verlaufenden Fadenabschnitte sind Fehler, die die Qualität der Spule erheblich mindern. Bei den vorgeschlagenen Verfahren tritt jedoch das Problem auf, daß einander überlappende Fadenüberlagerungen, bei denen die Überlagerungen zufälligerweise kontinuierlich überlappend vorliegen, manchmal als ein quer über die Stirnfläche verlaufender Fadenabschnitt beurteilt werden. Da daher eine fehlerfreie Spule als fehlerhaft beurteilt wird, ist es erforderlich, eine abschließende Nachkontrolle durch Sichtprüfung von Kontrollpersonal durchführen zu lassen.

Insbesondere bei Spulen aus hochglänzenden Kunststoff-Fasern, die stark reflektieren, stellen die in der DE 42 11 985 A1 vorgeschlagenen Verfahren keine Lösung für das Problem einer automatischen Spulenvermessung im Sinne einer Qualitätskontrolle dar.

Ein ähnliches Verfahren wie in der zitierten Offenlegungsschrift beschreibt die US DEF PUB 751 270, bei der mindestens zwei parallele Lichtbänder auf die Stirnflächen einer zu untersuchenden Spule projiziert werden. Das von der Stirnfläche reflektierte Licht wird von einem Photodetektor aufgenommen, der Schwankungen in der Intensität der Reflexion mißt. Aus den so erhaltenen Daten werden Wickelformfehler an den Stirnflächen der Spule durch Vergleich der Daten mit vorgegebenen Werten bestimmt. Auch dieses Verfahren ist abhängig von den Reflexionseigenschaften des Garnes der Spule.

Aus der JP-A 5-78013 ist ein Verfahren zum Prüfen eines außerhalb des eigentlichen Changierbereiches auf einer Spulenhülse verlegten Fadenabschnittes (Fadenreserve) bekannt, bei dem die Spule zur Untersuchung zunächst mittels eines schwarzen Vorhangs in einer Art Dunkelkammer von äußerem Licht isoliert wird. Sodann wird Licht mit einer Wellenlänge nahe dem Ultravioletten (180 bis 400 nm) auf einen Bereich der Spulenhülse eingestrahlt, innerhalb welchen Bereiches die Fadenreserve verlegt sein sollte. Trifft das ultraviolette Licht auf Garn, so regt das ultraviolette Licht die Moleküle des Garnes an. Beim Übergang vom angeregten in den Grundzustand senden die Garnmoleküle Licht im sichtbaren Bereich (400 bis 700 nm) aus. Ein Bilddetektor, dessen Empfindlichkeit gerade im sichtbaren Bereich liegt, empfängt das emittierte Licht und wandelt es in ein elektrisches Signal um, welches an eine Signalverarbeitungseinrichtung weitergeleitet wird. Die Signalverarbeitungseinrichtung stellt dann fest, an welcher Stelle auf der Spulenhülse die Fadenreserve verlegt und geschnitten wurde. Es basiert auf dem Grundgedanken, daß die Moleküle des Fadens von dem eingestrahlten ultravioletten Licht zu einer Strahlung angeregt werden, die von der derjenigen Strahlung verschieden ist, die von der Spulenhülse ausgeht. Es läßt sich damit feststellen, ob und an welcher Stelle auf einer Spulenhülse eine Fadenreserve verlegt und der Faden abgeschnitten wurde. Weitergehende Aussagen über die Beschaffenheit der Spule, insbesondere ihrer Mantel- und Stirnflächen, lassen sich mittels dieses Verfahrens nicht gewinnen. Auch ist es damit nicht möglich, eine am Ende des Aufspulvorgangs auf der bewickelten Mantelfläche der Spule gebildete Fadenreserve zu untersuchen.

Aus der TW 75 104 754 ist eine optische Meßeinrichtung zur Abstandsmessung zwischen einer Oberfläche und einer Referenzebene bekannt. Diese Meßeinrichtung beruht auf einem Verfahren, wobei ein Strahlenbündel senkrecht auf die zu vermessende Oberfläche gerichtet wird. Die von der Oberfläche reflektierten Lichtstrahlen werden mittels eines ebenfalls senkrecht zur Oberfläche angeordneten Linsensystems auf einen Strahlendetektor projiziert, wobei zwischen zwei Linsen ein Strahlensperrglied mit Strahlenfenster angeordnet ist, so daß auf der Detektoroberfläche ein bestimmtes Abbild entsteht. Die Abstände der Refererzebene zum Linsensystem und des Detektors zum Linsensystem sind gleich der Brennweite der Linsen, so daß die Ausdehnung der Abbildung auf der Detektoroberfläche ein Maß für den Abstand zwischen der Oberfläche und der Referenzebene ist.

Dieses Verfahren weist den Nachteil auf, daß Reflektionsstreuungen, die durch Oberflächenunebenheiten verursacht werden, zu Abbildungsvezerrungen führen und Fehlmessungen zur Folge haben. Eine weitere Fehlerquelle liegt in der genauen Ausrichtung der Meßeinrichtung zu der Referenzebene. Unter Berücksichtigung der Spulenoberflächenstruktur, die Ausbauchungen, Sättel, Schlaufen, Flusen und Filamentbrüche beinhalten kann, ist die Ermittlung von Abschlägern mit der Meßeinrichtung aus TW 75 104 754 nicht möglich.

In der TW 75 105 126 ist eine Meßeinrichtung zur optischen Vermessung von Oberflächenprofilen offenbart. Bei dem zugrundeliegenden Meßverfahren wird ein Lichtstrahl an einem um seine Mittelachse oszilierenden Spiegel umgelenkt, so daß der Lichtstrahl in ein Linsensystem eintritt und im Wesentlichen senkrecht mit kleinen Winkelabweichungen auf die zu vermessende Oberfläche gelenkt wird. In der optischen Achse zwischen Spiegel und Linsensystem ist ein Strahlungsteiler angeordnet, der die reflektierten Strahlen der Oberfläche auf einen Lagedetektor projiziert. Durch den in seiner Richtung veränderlichen Lichstrahl wird ein sich ständig ändernder Strahlenfleck auf der Oberfläche des Lagedetektors projiziert. Der Lagedetektor erzeugt ein oszilierendes Ausgangssignal, dessen Amplitude als Maß für den Abstand zwischen einer Referenzfläche und der Oberfläche ausgewertet wird. Die Abstände der Referenzfläche, des Spiegels und des Lagedetektors zum Linsensystem sind jeweils gleich der Brennweiten des Linsensystems. Auch bei diesem Verfahren führen unvermeidbare Abbildungsverzerrungen aufgrund von Reflektionsstreuungen zu erheblichen Meßfehlern. Der Vorschlag, bei unbekannten Oberflächenrauhigkeiten die Meßeinrichtung mit einem zweiten Detektor zu ergänzen, führt zu einer komplexen Meßeinrichtung ohne den Nachteil ganz zu beseitigen. Die genaue Positionierung der Meßeinrichtung zur Referenzfläche ist ebenfalls von Nachteil.

Davon ausgehend liegt der Erfindung die **AUFGABE** zugrunde, ein Verfahren zur Vermessung von Spulenoberflächen anzugeben, das von den Reflexionseigenschaften des aufgespulten Garnes nahezu unabhängig ist, das mit einfachen und preisgünstigen Mitteln zu realisieren ist, das überall angewendet werden kann - insbesondere auch in Räumen mit normaler Beleuchtung und ohne eine zu untersuchende Spule in einer Dunkelkammer abzuschirmen -, das sich zur Vermessung der gesamten Oberfläche einer Spule - also zur Vermessung der beiden Stirnflächen und der Mantelfläche einschließlich der Flächen auf der Spulenhülse, auf denen kein oder nur wenig Faden verlegt ist - eignet und das zur Vermessung einer Spule nur wenig Zeit benötigt.

Als technische **LÖSUNG** wird ein Verfahren mit den Merkmalen des Anspruchs 1 vorgeschlagen.

Das Verfahren hat den Vorteil, daß alle Arten von Fadenspulen vermessen werden können, insbesondere auch solche aus synthetischen texturierten oder nicht texturierten Fäden. Dabei werden unter dem Begriff "Faden" alle Alten von fadenförmigen textilen Gebilden verstanden, insbesondere die Monofile, die nur aus einem Filament bestehen, die multifilen Fäden, die aus einer Vielzahl von Filamenten bestehen, sowie die Bändchen, die die Form einer flachen oder zusammengedrehten Folie haben.

Das Verfahren hat den weiteren Vorteil, daß die gemessenen Daten nach vielen verschiedenen, vom Anwender vorgegebenen Kriterien ausgewertet werden können und sich insbesondere zur Bestimmung der verschiedensten Qualitätsparameter eignen.

Wird der die Spule abtastende Lichtstrahl gemäß Anspruch 5 mittels eines Lasers erzeugt, so hat dies den Vorteil, daß sich durch einfache, bekannte Kunstgriffe (z. B planparallele Spiegel) die Laserwelle von selbst bündelt - während die einzelnen Teilchen eines thermischen Strahlers grundsätzlich allseitig Kugelwellen abstrahlen. Damit ergibt sich die beste Annäherung an ein Parallelbündel, die mit Rücksicht auf die Wellennatur des Lichtes überhaupt erzielbar ist. So kann die endliche Ausdehnung einer thermischen Lichtquelle immer nur auf ein Bild zusammengezogen werden, dessen Bildgröße B sich aus der Beziehung $B = Gb/g$ zwischen Bildweite und Gegenstandsweite ($b$ und $g$) sowie Gegenstandsgröße $G$ ergibt. Wenn man nun $g$ sehr groß und damit B sehr klein machte, würde das abbildende System nur noch wenig Leistung auffangen, da die Intensität der kugelwellig abgestrahlten Strahlen quadratisch mit ihrer zunehmender Entfernung von der Lichtquelle abnimmt. Dagegen läßt sich ein Laser mit seinem streng parallelen Bündel als praktisch unendlich ferne Lichtquelle auffassen, womit $g$ unendlich ist und die Bildgröße B damit geometrisch-optisch unendlich klein würde. Da dann die Intensität des Lichtes praktisch nicht abnimmt, bedeutet dies, daß bei Verwendung eines Lasers zur Erzeugung des Lichtstrahles das optische Auflösungsvermögen des Verfahrens so groß sein kann, daß damit noch Strukturen vermessen werden können, die kleiner sind als die Durchmesser der feinsten vorkommenden Fäden.

Je nach Art, Gewicht und Größe der zu untersuchenden Spulen und in Abhängigkeit von dem für die Anwendung des Verfahrens zur Verfügung stehenden Platz kann eine Auslegung der Abtastbahn gemäß Anspruch 6 oder 7 besonders sinnvoll sein. Dabei ergibt sich die Form der Abtastbahn immer aus der Relativbewegung von Lichtstrahl und Spule, d. h., daß entweder der Lichtstrahl, z. B. mittels eines Ablenkspiegels, oder die Spule oder beide bewegt werden.

Je nachdem, was der Anwender aus der Vermessung der Spulenoberfläche über die Spule erfahren möchte, kann es sinnvoll sein, die ermittelten Höhenlagen der einzelnen Abtastpunkte auf der Spulenoberfläche gemäß Anspruch 8 zu einem Höhenprofil der Spulenoberfläche zusammenzusetzen. Dabei ist unter dem Begriff "Höhenprofil" eine dreidimensionale Matrix zu verstehen, in welcher für jeden Abtastpunkt der untersuchten Oberfläche drei voneinander unabhängige Raumkoordinaten des Abtastpunktes festgehalten werden, so daß eine Aussage über die Höhen und Tiefen auf der Oberfläche der Spule getroffen werden kann.

Der Vergleich des ermittelten Höhenprofils mit einem Idealprofil zur Ermittlung eines Qualitätsparameters gemäß Anspruch 9 hat den Vorteil, daß die bislang aufwendig von Kontrollpersonal durchgeführte Qualitätsanalyse der Spulen nunmehr vollautomatisch erfolgen kann. Die zu untersuchenden Fadenspulen können dabei nach verschiedenen Qualitätskriterien beurteilt werden. Insbesondere ist es mit dem Verfahren auch möglich, sog. "Abschläger" zu erkennen. Abschläger sind jene Teile des Fadens, die an den Spulenstirnseiten aus ihrer eigentlichen Position am Umfang der Spulen abgerutscht sind und nunmehr, ähnlich einer Kreissehne, quer auf der Spulenstirnfläche liegen. Gerade die Erkennung von Abschlägern bei sehr feinen Garnen stellt bislang hohe Anforderungen an die Sehleistung der prüfenden Person und erfordert angestrengtes Sehen bei großer Lichtstärke, was zu einer schnellen Ermüdung der Augen führt. Aber auch andere Kriterien zur Beurteilung der Qualität einer Spule können von dem vorgeschlagenen Verfahren - wie unten beschrieben - überprüft werden.

Wird das Verfahren gemäß den Ansprüchen 10 bis 12 angewendet, so lassen sich weitere Aussagen über die vermessene Spulenoberfläche treffen, da sich z. B. Ölflecken auf der Spule oder Veränderungen des Polymers des Fadens in der Regel in einer Änderung des Reflexionsvermögens des Fadens wiederspiegeln.

Die Anwendung des Verfahrens gemäß Anspruch 13 erlaubt z. B. eine einfache und schnelle Überprüfung ob, und wenn ja, wo eine Fadenreserve auf der Spulenhülse verlegt wurde.

Besonders vorteilhaft läßt sich das Verfahren gemäß Anspruch 14 auch zur Steuerung der die Spule herstellenden Textilmaschine verwenden, da das vorgeschlagene Vermessungsverfahren sehr schnell arbeitet. Wird es unmittelbar auf die frisch hergestellten Spulen angewendet, so kann - falls die Spulen Qualitätsmängel aufweisen sollten - die die Spulen herstellende Textilmaschine sofort entsprechend nachgeregelt werden.

Weitere Einzelheiten und Vorteile der Erfindung ergeben sich aus der folgenden Beschreibung der lediglich Ausführungsbeispiele zeigenden Figuren.

Es zeigen:

Fig. 1      eine Prinzip-Skizze zur Verdeutlichung des Grundprinzips des Verfahrens;

Fig. 2      das Verfahren mit punktförmiger Fokussierung eines Teiles des reflektierten Lichtes auf einen Flächensensor;

Fig. 3a      die Anwendung des Verfahrens auf eine Stirnfläche einer Spule, wobei ein Teil des reflektierten Lichtes linienförmig fokussiert und auf einen Linien-Sensor gerichtet wird;

Fig. 3b die Anwendung des Verfahrens nach Fig. 3a auf die Mantelfläche der Spule;

Fig. 4 die Anwendung des Verfahrens, bei welchem der Lichtstrahl vor dem Auftreffen auf die Spule zu einer Linie fokussiert wird.

Sofern nicht anders gesagt, wurden in den Figuren gleich- wirkende Teile immer mit dem gleichen Bezugszeichen versehen.

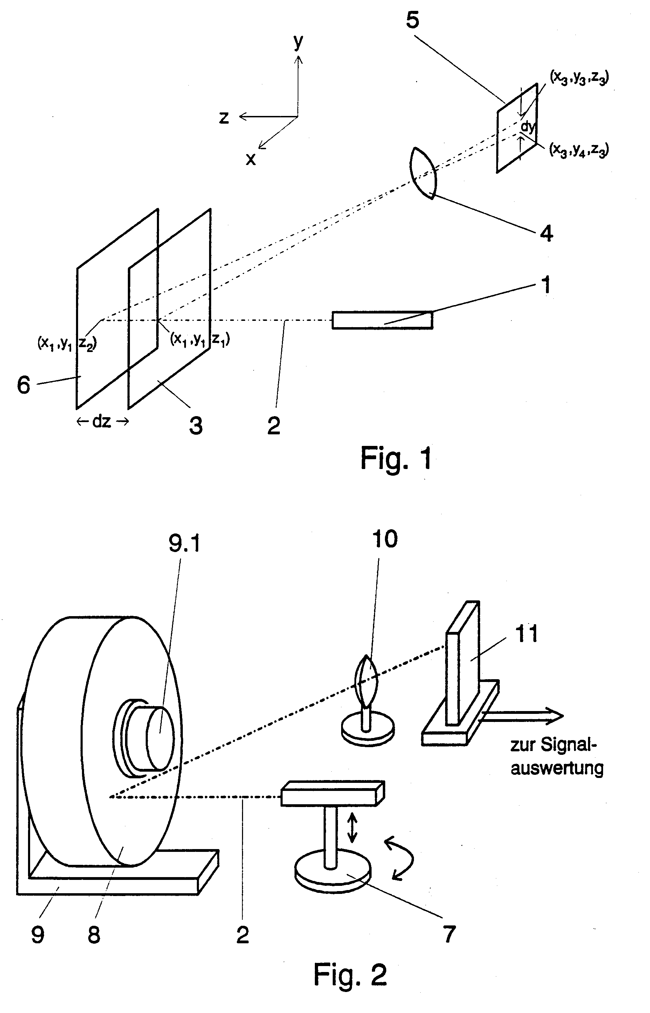

Die Fig. 1 verdeutlicht das Grundprinzip des Meßverfahrens. Dabei erzeugt eine Lichtquelle 1 einen durch die strichpunktierte Linie dargestellten Lichtstrahl 2. Dieser Lichtstrahl 2 trifft in einer ersten Ebene 3 auf einen Punkt mit den Koordinaten $(x_1,y_1,z_1)$ und wird dort diffus reflektiert. Ein Teil der diffus reflektierten Strahlen werden von einer Linse 4 punktförmig fokussiert und auf einen Flächensensor 5 gerichtet, so daß sie den Flächensensor 5 in einem Punkt mit den Koordinaten $(x_3,y_3,z_3)$ treffen. Trifft der Lichtstrahl 2 dagegen einen Punkt mit den Koordinaten $(x_1,y_1,z_2)$, welcher sich in einer zweiten Ebene 6 befindet, die in der Tiefe um eine Entfernung dz gegenüber der ersten Ebene 2 verschoben ist, so wird das von diesem Punkt diffus reflektierte Licht von der Linse 4 so fokussiert und auf den Flächensensor 5 gerichtet, daß es den Flächensensor 5 in einem Punkt mit den Koordinaten $(x_3,y_4,z_3)$ trifft. Dies bedeutet, daß sich eine Änderung in der Tiefenrichtung z in einer Änderung der Auftreffpunkte auf dem Flächensensor wiederspiegelt (bei der zur Verdeutlichung des Prinzips gewählten Anordnung äußert sich eine Verschiebung der die Reflexion verursachenden Punkte um dz gerade in einer Verschiebung der Auftreffpunkte um dy). Aus der Lage der Auftreffpunkte auf den Flächensensor 5 läßt sich also direkt auf den Ort des die Reflexion hervorrufenden Abtastpunktes schließen, wenn Lichtquelle, Abtastpunkt und Sensor in einem Dreieck angeordnet werden.

In der Fig. 2 wird der Lichtstrahl 2 von einer verfahrbaren Lichtquelle 7 erzeugt und auf eine zu untersuchende Spule 8 gerichtet. Dabei befindet sich die Spule 8 auf einem Spulenträger 9, welcher einen Dorn 9.1 zum Aufstecken der Spule aufweist. Ein Teil der diffus reflektierten Lichtstrahlen wird von einer Linse 10 punktförmig fokussiert und auf einen Flächensensor 11 gerichtet. Aus der Stellung der verfahrbaren Lichtquelle 7 relativ zur Spule 8 ergeben sich die beiden Flächenkoordinaten des jeweiligen Abtastpunktes auf der Spulenoberfläche. Der Flächensensor 11 mißt die Ist-Lage des Auftreffpunktes. Werden nun dem Auftreffpunkt zur Bestimmung seiner geometrischen Soll-Lage die Koordinaten des Abtastpunktes zugeordnet, so ergibt sich aus den Differenz-Koordinaten zwischen der Ist-Lage und der Soll-Lage des Auftreffpunktes die Höhenlage des Abtastpunktes auf der Spulenoberfläche. Dabei kann es sich bei dem Flächensensor 11 z. B. um einen matrixförmigen CCD-Sensor aus vielen einzelnen, flächig neben- und übereinander angeordneten CCD-Elementen handeln.

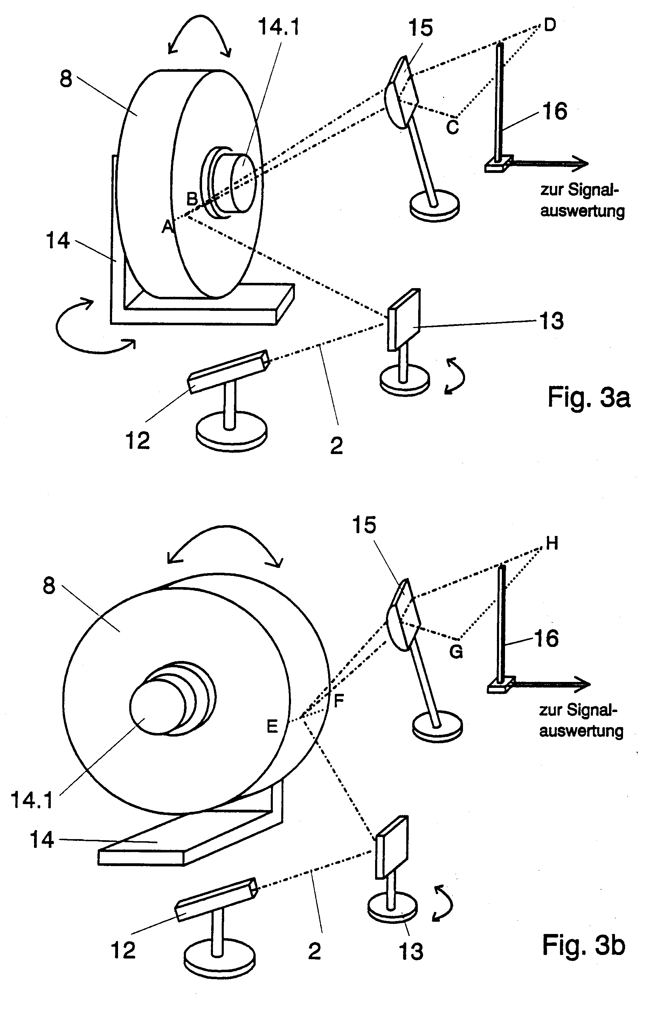

In den Figuren 3a und 3b wird der Lichtstrahl 2 von einer feststehenden Lichtquelle 12 erzeugt und auf einen drehbaren Spiegel 13 gerichtet. Dieser Spiegel 13 lenkt den Lichtstrahl 2 auf verschiedene Abtastpunkte entlang einer geraden Linie AB. Die zu untersuchende Spule 8 ist dabei auf einem verfahrbaren Spulenträger 14 drehbar gelagert. Der Spulenträger 14 weist einen drehbaren Dorn 14.1 für die Spule 8 auf. Um Abtastpunkte auf der ganzen Spulenoberfläche zu erfassen, sind nun verschiedene Vorgehensweisen denkbar. So kann zunächst die Spule in der in Fig. 3a gezeigten Position festgehalten werden und der Lichtstrahl 2 wird mittels des Drehspielgels 13 entlang der Linie AB auf einer Stirnfläche der Spule in radialer Richtung abgelenkt. Ist der Abtastvorgang in dieser Richtung beendet, so dreht der Dorn 14.1 die Spule ein Stück weiter und die nächste Linie auf der Spulenstirnfläche wird abgetastet. Der Drehspiegel kann sich z.B. Teil eines Spiegelgalvanometers sein, welches sich durch seine hohe Ablenkfrequenz auszeichnet. Damit kann die Spule im Sekundenbereich abgetastet werden, bei einer Spuledrehzahl von 1 bis 2 Umdrehungen pro Sekunde. Ein Teil der von jedem Abtastpunkt diffus reflektierten Lichtstrahlen wird nun von einer Zylinderlinse 15 linienförmig fokussiert und auf einen Liniensor 16 gerichtet. Die von der Zylinder-Linse 15 erzeugte Linie CD schneidet in der in den Figuren 3a und 3b gezeigten speziellen Anordnung den Liniensensor 16 senkrecht. Wäre die Spulenstirnfläche absolut eben, so würden bei einer Abtastung entlang der Linie AB von der Zylinderlinse immer Linien CD erzeugt, die auf einer Geraden einander überlappend liegen. Dies bedeutet, daß von dem Liniensensor 16 immer dieselbe Lage des Schnittpunktes gemessen würde. Da bei dem vorgeschlagenen Verfahren nur eine Höhenänderung auf der zu untersuchenden Spulenoberfläche interessiert (da aus der relativen Stellung von Drehspiegel und Spule die Flächen-Koordinaten des Abtastpunktes bereits bekannt sind) kann mittels der Zylinderlinse 15 das Verfahren invariant gegenüber Änderungen innerhalb der bekannten Ebene gemacht werden. Als Sensor reicht bei diesem Verfahren eine einzelne Zeile von CCD-Elementen aus. Es können aber auch andere Arten von Sensoren verwendet werden, z. B. die sog. PSD-(Position-Sensitive-Device)-Sensoren. Grundsätzlich eignen sich sowohl digital wie analog arbeitende Sensoren, also auch Photodioden, Photoelemente und Photowiderstände. Bei Verwendung einer Photodiode, die ein Signalgemisch, welches Abstand und Reflexionsvermögen des Objektes gleichzeitig wiedergibt, liefert, kann mit Hilfe einer zweiten Photodiode, der sogenannten Kompensationsdiode, die nur den Signalteil erfaßt, der dem Reflexionsvermögen entspricht, durch Differenzbildung beider Signale das bereinigte Ortssignal erhalten werden. In der Fig. 3b ist der Spulenträger 14 um 90° geschwenkt, so daß jetzt die Mantelfläche der Spule 8 vermessen werden kann. Dabei wird der Lichtstrahl 2 von dem Drehspiegel 13 auf Abtastpunkte entlang einer Linie EF gelenkt. Immer wenn der Lichtstrahl an einem Ende dieser Linie angelangt ist, dreht der Dorn 14.11 die Spule 8 ein Stück weiter und ein neuer Abtastvorgang beginnt.

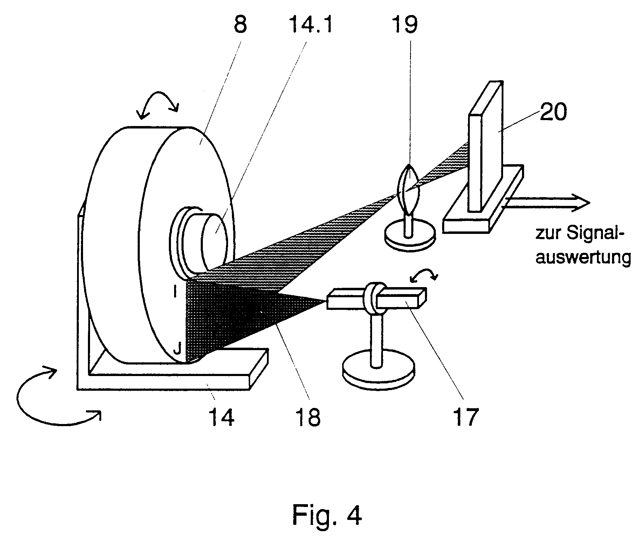

Eine besonders schnelle Variante des Verfahrens zeigt die Fig. 4. Dabei ist in der um ihre Längsachse schwenkbare Lichtquelle 17 bereits eine Zylinderlinse integriert, die den Lichtstrahl so auffächert, daß die zu untersuchende Spulenoberfläche von dem aufgefächerten Lichtstrahl 18 auf einer Linie IJ getroffen wird. Aus der relativen Stellung von Lichtquelle 17 und Spule 8 zueinander ergeben sich die beiden Flächenkoordinaten von verschiedenen, entlang der Linie IJ liegenden Abtastpunkten auf der Spulenoberfläche. Ein Teil der von diesen Abtastpunkten diffus reflektierten Lichtstrahlen wird von einer Linse 19 fokussiert und auf einen Flächensensor 20 gelenkt. Aus der Lage der Auftreffpunkte auf dem Flächensensor läßt sich nun durch Differenzbildung zwischen der Ist-Lage und der Soll-Lage der Auftreffpunkte, wobei sich die Soll-Lage aus den Flächenkoordinaten der Abtastpunkte ergibt, die Höhenlage der jeweiligen Abtastpunkte ermitteln. So können also zu einem einzigen Meßzeitpunkt gleich mehrere Abtastpunkte auf der Spulenoberfläche erfaßt werden. Die Spule 8 ist dabei auf einem schwenkbaren Spulenträger 14 drehbar gelagert. Der Spulenträger 14 weist einen Aufsteckdorn 14.1 für die Spule 8 auf. Wurde eine Linie auf der zu untersuchenden Spulenoberfläche abgetastet, so dreht der Dorn 14.1 die Spule ein Stück weiter. Ist eine Spulenoberfläche, z. B. eine Stirnfläche, erfaßt, so kann der Spulenträger 14 um 90° geschwenkt und die Lichtquelle 17 so um 90° gedreht werden, daß die vorher vertikale Abtastlinie nun horizontal liegt und nun die Mantelfläche der Spule 8 vermessen werden kann.

Das mit einem der vorstehend beschriebenen Verfahren erfaßte Höhenprofil ist ein objektives Maß für die Beschaffenheit der Spulenstirnfläche.

Die Ortslage - und nicht die Helligkeit des Reflexes - auf dem Sensor ist ein Maß für die Höhenlage. Damit ist das Verfahren unabhängig von den Reflexionseigenschaften der untersuchten Spule. Die Intensität des reflektierten Lichtes kann jedoch von den Sensoren auch gemessen und den jeweiligen Abtastpunkten zugeordnet werden. Damit lassen sich verschiedene Qualitätsparameter - z. B. Verschmutzungen und Polymerveränderungen - der Spule messen. Werden die gemessenen Höhenlagen der Abtastpunkte zu einem Höhenprofil der Spulenoberfläche zusammengesetzt, so lassen sich aus Vergleich dieses Ist-Profils mit einem Soll-Profil verschiedene Qualitätsparameter der Spule bestimmen. So äußern sich z. B. die schon erwähnten Abschläger in einer linienförmigen Erhöhung auf der Spulenstirnfläche. Andere Eigenschaften der Spule, die mit den vorgeschlagenen Verfahren vermessen werden können, sind z. B. Sattel, Bauch, Schlaufen, Flusen und Filamentbrüche. Dabei bezeichnet der Begriff "Sattel" eine Vertiefung zur Mitte hin bei der Mantelfläche der Spule. Unter dem Begriff "Bauch" ist eine Ausbauchung einer Stirnfläche der Spule zu verstehen. Schlaufen können sich auf Stirn- und Mantelfäche der Spule bilden und sind nicht stramm verlegte Fadenstücke, die schlaufenartig aus der Spule vorstehen. Je nach Art des aufgespulten Garnes kann es beim Aufspulprozeß zur Flusenbildung kommen, bei der umherfliegende Flusen von dem im Aufspulprozeß befindlichen Faden gefangen und mit aufgespult werden.

Besonders vorteilhaft läßt sich das Verfahren also zur automatischen Ermittlung von Qualitätsparametern der Spule einsetzen. Die ermittelten Qualitätsparameter können leicht auf einem Datenträger festgehalten werden, welcher an der Spule angebracht wird. Die Spulen sind somit fertig zur Verpackung. Die ermittelten Qualitätsdaten lassen sich aber auch besonders vorteilhaft zur Steuerung der die Spulen herstellenden Anlage nutzen, da die vorgeschlagenen Verfahren sehr schnell Qualitätsparameter der Spule bestimmen können. Werden die Verfahren unmittelbar nach dem Herstellen der Spulen auf die frisch hergestellten Spulen angewendet, so können Fehler an den Spulen sehr schnell erkannt und die Anlage entsprechend nachgeregelt werden.

**Bezugszeichenliste:**

| | |
|---|---|
| 1 | Lichtquelle |
| 2 | Lichtstrahl |
| 3 | erste Ebene |
| 4 | Linse |
| 5 | Flächensensor |
| 6 | zweite Ebene |
| 7 | Lichtquelle |
| 8 | Spule |
| 9 | Spulenträger |
| 9.1 | Aufsteckdorn |
| 10 | Linse |
| 11 | Flächensensor |
| 12 | Lichtquelle |
| 13 | Drehspiegel |
| 14 | Spulenträger |
| 14.1 | Aufsteckdorn |
| 15 | Zylinderlinse |
| 16 | Liniensensor |
| 17 | Lichtquelle |
| 18 | Lichtstrahl |
| 19 | Linse |
| 20 | Flächensensor |

**Patentansprüche**

1. Verfahren zur optischen Vermessung einer Spulenoberfläche von Fadenspulen (8), bei dem

- zu jedem vorgegebenen Meßzeitpunkt ein Lichtstrahl (2, 18) auf einen Abtastpunkt der Spulenoberfläche gerichtet wird,
- die Koordinaten (x, y, z) des Abtastpunktes erfaßt werden,
- ein Teil der diffus von dem Abtastpunkt reflektierten Lichtstrahlen fokussiert und so auf einen Sensor (5, 11, 16, 20) gerichtet werden, daß sie den Sensor (5, 11, 16, 20) in einem Auftreffpunkt treffen,
- mit dem Sensor (5, 11, 16, 20) die Ist-Lage des Auftreffpunktes auf dem Sensor (5, 11, 16, 20) gemessen wird,
- dem Auftreffpunkt zur Bestimmung seiner geometrischen Soll-Lage die Koordinaten des Abtastpunktes zugeordnet werden,
- die Differenzkoordinaten zwischen der Ist-Lage und der Soll-Lage des Auftreffpunktes ermittelt werden,
- aus den Differenzkoordinaten die Höhenlage des Abtastpunktes ermittelt wird.

2. Verfahren nach Anspruch 1, bei dem ein Teil der diffus von dem Abtastpunkt reflektierten Lichtstrahlen fokussiert und auf einen Flächensensor (5, 11, 20) gerichtet werden, so daß sie den Flächensensor (5, 11, 20) in einem Auftreffpunkt treffen, und mit dem Flächensensor (5, 11, 20) die Ist-Lage des Auftreffpunktes auf dem Flächensensor (5, 11, 20) gemessen wird,

3. Verfahren nach Anspruch 1 oder 2, bei dem

- der Lichtstrahl (18) vor dem Auftreffen auf die Spulenoberfläche mittels einer Zylinderlinse zu einer Lichtlinie fokussiert und die Lichtlinie auf eine Abtastbahn der Spulenoberfläche gerichtet wird,
- zu jedem vorgegebenen Meßzeitpunkt von verschiedenen Abtastpunkten auf der Lichtlinie jeweils Koordinaten des jeweiligen Abtastpunktes auf der Spulenoberfläche erfaßt werden,
- ein Teil der diffus von jedem Abtastpunkt auf der Spulenoberfläche reflektierten Lichtstrahlen fokussiert und auf den Flächensensor (20) gerichtet werden, so daß diese fokussierten, von einem einzelnen Abtastpunkt reflektierten Strahlen den Flächensensor (20) in einem Auftreffpunkt treffen.

4. Verfahren nach Anspruch 1, bei dem ein Teil der diffus von dem Abtastpunkt reflektierten Lichtstrahlen mittels einer Zylinderlinse (15) zu einer Lichtlinie (CD; GH) fokussiert und auf einen langgestreckten Liniensensor (16) derart gelenkt werden, daß die Lichtlinie (CD; GH) den Liniensensor (16) schneidet, und mit dem Liniensensor (16) die Ist-Lage des durch einen Schnittpunkt von Lichtlinie (CD; GH) und Liniensensor (16) gebildeten Auftreffpunktes gemessen wird.

5. Verfahren nach einem der vorangegangenen Ansprüche 1 bis 4, dadurch gekennzeichnet, daß der Lichtstrahl (2) mittels eines Lasers erzeugt wird.

6. Verfahren nach einem der vorangegangenen Ansprüche 1 bis 5, dadurch gekennzeichnet, daß die Abtastbahn eine Spirale ist.

7. Verfahren nach einem der vorangegangenen Ansprüche 1 bis 6, dadurch gekennzeichnet, daß die Abtastbahn aus einer Vielzahl von geraden Linien besteht.

8. Verfahren nach einem der vorangegangenen Ansprüche 1 bis 7, dadurch gekennzeichnet, daß die ermittelten Höhenlagen (dy) zu einem Höhenprofil der Spulenoberfläche zusammengesetzt werden.

9. Verfahren nach Anspruch 8, dadurch gekennzeichnet, daß das Höhenprofil mit einem Idealprofil verglichen und daß daraus Qualitätsparameter der Spule (8) ermittelt werden.

10. Verfahren nach einem der vorangegangenen Ansprüche 1 bis 8, dadurch gekennzeichnet, daß von dem Sensor (5, 11, 16, 20) zusätzlich zur Lage des Auftreffpunktes die Intensität des auftreffenden Lichtes gemessen wird.

11. Verfahren nach Anspruch 10, dadurch gekennzeichnet, daß jedem Abtastpunkt die gemessene Intensität des von ihm reflektierten Lichtes zugeordnet wird und daß aus der Gesamtheit der Abtastpunkte ein Profil des Reflexionsvermögens der Spulenoberfläche ermittelt wird.

12. Verfahren nach Anspruch 11, dadurch gekennzeichnet, daß das Profil des Reflexionsvermögens der Spulenoberfläche mit einem Idealprofil verglichen wird und daß daraus Qualitätsparameter der Spule (8) ermittelt werden.

13. Verfahren nach einem der vorangegangenen Ansprüche 1 bis 12,

dadurch gekennzeichnet, daß
der Lichtstrahl (2, 18) eine Spulenhülse auf einer vorgegebenen Bahn abtastet und ein Höhenprofil der Spulenhülse erzeugt, welches zur Ermittlung eines Qualitätsparameters mit einem Idealprofil der Spulenhülse verglichen wird.

14. Verfahren nach einem der vorangegangenen Ansprüche 9, 10 oder 13,
dadurch gekennzeichnet, daß
daß die ermittelten Qualitätsparameter zur Steuerung der die Spule (8) herstellenden Textilmaschine verwendet werden.

**Claims**

1. A method of optically measuring the surface of yarn packages (8), wherein

   - at each predetermined measuring time a light beam (2, 18) is directed onto a scanning spot of the package surface,
   - the coordinates (x, y, z) of the scanning spot are determined,
   - a portion of the light beams reflected diffusely from the scanning spot are focussed and are directed onto a sensor (5, 11, 16, 20) so that they meet the sensor (5, 11, 16, 20) in a point of incidence,
   - the actual position of the point of incidence on the sensor (5, 11, 16, 20) is measured with the sensor (5, 11, 16, 20),
   - the coordinates of the scanning spot are related to the point of incidence in order to determine the desired geometric position of the latter,
   - the difference coordinates between the actual position and the desired position of the point of incidence are determined,
   - the height of the scanning spot is determined from the difference coordinates.

2. Method according to claim 1, in which a portion of the light beams reflected diffusely from the scanning spot are focussed and are directed onto a surface sensor (5, 11, 20) so that they meet the surface sensor (5, 11, 20) in a point of incidence, and the actual position of the point of incidence on the surface sensor (5, 11, 20) is measured with the surface sensor (5, 11, 20).

3. Method according to claim 1 or 2, in which

   - the light beam (18) is prior to the incidence onto the package surface focussed relative to a line of light by means of a cylindrical lens and the line of light is directed onto a scanning path of the package surface,

   - at each predetermined measuring time coordinates of the respective scanning point are determined on the package surface from various scanning points on the line of light,
   - a portion of the light beams reflected diffusely from each scanning spot on the package surface are focussed and are directed onto the surface sensor (20), so that said focussed beams reflected from a single scanning point meet the surface sensor (20) in a point of incidence.

4. A method according to claim 1, in which a portion of the light beams reflected diffusely from the scanning point are focussed relative to a line of light (CD; GH) by means of a cylindrical lens (15) and are deflected onto an elongated line sensor (16) in such a way that the line of light (CD; GH) cuts the line sensor (16), and the actual position of the point of incidence formed by an intersection point of line of light (CD; GH) and line sensor (16) is measured with the line sensor (16).

5. A method according to one of the preceding claims 1 to 4,
characterised in that
the light beam (2) is produced by means of a laser.

6. A method according to one of the preceding claims 1 to 5,
characterised in that
the scanning path is a spiral.

7. A method according to one of the preceding claims 1 to 6,
characterised in that
the scanning path consists of a large number of straight lines.

8. A method according to one of the preceding claims 1 to 7,
characterised in that
the heights (dy) determined are combined into a height profile of the package surface.

9. A method according to claim 8,
characterised in that
the height profile is compared with an ideal profile and that quality parameters of the package (8) are determined therefrom.

10. A method according to one of the preceding claims 1 to 8,
characterised in that
there is measured by the sensor (5, 11, 16, 20), in addition to the position of the point of incidence, the intensity of the incident light.

**11.** A method according to claim 10, characterised in that there is related to each scanning point the measured intensity of the light reflected from it and that a profile of the reflecting power of the package surface is determined from the totality of the scanning points.

**12.** A method according to claim 11, characterised in that the profile of the reflecting power of the package surface is compared with an ideal profile and that quality parameters of the package (8) are determined therefrom.

**13.** A method according to one of the preceding claims 1 to 12, characterised in that the light beam (2, 18) scans a package tube on a predetermined path and produces a height profile of the package tube, which is compared with an ideal profile of the package tube in order to determine a quality parameter.

**14.** A method according to one of the preceding claims 9, 10 or 13, characterised in that the quality parameters determined are used to control the textile machine producing the package (8).

**Revendications**

**1.** Procédé destiné à la mesure optique d'une surface de bobine de bobines (8) de fil, selon lequel

- un rayon lumineux (2, 18) est orienté sur un point de balayage de la surface de la bobine à chaque instant de mesure prédéterminé,
- les coordonnées (x, y, z) du point de balayage sont détectées,
- une partie des rayons lumineux réfléchis par diffusion par le point de balayage est focalisée, et orientée sur un détecteur (5, 11, 16, 20) de telle sorte qu'elle arrive sur le détecteur (5, 11, 16, 20) dans un point d'incidence,
- la position réelle du point d'incidence sur le détecteur (5, 11, 16, 20) est mesurée par le détecteur (5, 11, 16, 20),
- les coordonnées du point de balayage sont associées au point d'incidence pour la détermination de sa position géométrique théorique,
- les différences de coordonnées entre la position réelle et la position théorique du point d'incidence sont déterminées,
- la position en hauteur du point de balayage est déterminée à partir des différences de coordonnées.

**2.** Procédé suivant la revendication 1, selon lequel une partie des rayons lumineux réfléchis par diffusion par le point de balayage est focalisée, et orientée sur un détecteur de surface (5, 11, 20) de telle sorte qu'elle arrive sur le détecteur de surface (5, 11, 20) dans un point d'incidence, et que la position réelle du point d'incidence sur le détecteur de surface (5, 11, 20) soit mesurée par le détecteur de surface (5, 11, 20).

**3.** Procédé suivant la revendication 1 ou 2, selon lequel

- le rayon lumineux (18) est focalisé en une raie lumineuse au moyen d'une lentille cylindrique avant d'arriver sur la surface de la bobine, et la raie lumineuse est dirigée sur une voie de balayage de la surface de la bobine,
- à chaque instant de mesure prédéterminé de différents points de balayage situés sur la raie lumineuse, des coordonnées du point de balayage respectif sur la surface de la bobine sont détectées,
- une partie des rayons lumineux réfléchis par diffusion par chaque point de balayage situé sur la surface de la bobine est focalisée, et orientée sur le détecteur de surface (20) de telle sorte que ces rayons focalisés, qui sont réfléchis par un seul point de balayage, arrivent sur le détecteur de surface (20) dans un point d'incidence.

**4.** Procédé suivant la revendication 1, selon lequel une partie des rayons lumineux réfléchis par diffusion par le point de balayage est focalisée en une raie lumineuse (CD ; GH) au moyen d'une lentille cylindrique (15), et dirigée sur un détecteur de raie (16) allongé de telle sorte que la raie lumineuse (CD ; GH) coupe le détecteur de raie (16), et que la position réelle du point d'incidence formé par un point d'intersection entre la raie lumineuse (CD ; GH) et le détecteur de raie (16) soit mesurée par le détecteur de raie (16).

**5.** Procédé suivant l'une quelconque des revendications précédentes 1 à 4, caractérisé en ce que le rayon lumineux (2) est généré au moyen d'un laser.

**6.** Procédé suivant l'une quelconque des revendications précédentes 1 à 5, caractérisé en ce que la voie de balayage est une spirale.

**7.** Procédé suivant l'une quelconque des revendications précédentes 1 à 6, caractérisé en ce que

la voie de balayage est constituée d'une pluralité de lignes droites.

8. Procédé suivant l'une quelconque des revendications précédentes 1 à 7,
   caractérisé en ce que
   les positions en hauteur (dy) déterminées sont regroupées en un profil de hauteur de la surface de la bobine.

9. Procédé suivant la revendication 8,
   caractérisé en ce que
   le profil de hauteur est comparé avec un profil idéal, et en ce qu'à partir de là est déterminé le paramètre de qualité de la bobine (8).

10. Procédé suivant l'une quelconque des revendications précédentes 1 à 8,
    caractérisé en ce que,
    outre la position du point d'incidence, le détecteur (5, 11, 16, 20) mesure l'intensité de la lumière incidente.

11. Procédé suivant la revendication 10,
    caractérisé en ce que
    l'intensité mesurée de la lumière qu'il réfléchit est associée à chaque point de balayage, et
    en ce qu'un profil du pouvoir de réflexion de la surface de la bobine est déterminé à partir de l'ensemble des points de balayage.

12. Procédé suivant la revendication 11,
    caractérisé en ce que
    le profil du pouvoir de réflexion de la surface de la bobine est comparé avec un profil idéal, et
    en ce qu'à partir de là est déterminé le paramètre de qualité de la bobine (8).

13. Procédé suivant l'une quelconque des revendications précédentes 1 à 12,
    caractérisé en ce que
    le rayon lumineux (2, 18) balaie une douille de bobine sur une voie prédéterminée et génère un profil de hauteur de la douille de la bobine, lequel est comparé avec un profit idéal de la douille de la bobine afin de déterminer un paramètre de qualité.

14. Procédé suivant l'une quelconque des revendications précédentes 9, 10 ou 13,
    caractérisé en ce que
    les paramètres de qualité déterminés sont utilisés pour la commande de la machine textile fabriquant la bobine (8).

**Fig. 1**

zur Signalauswertung

**Fig. 2**

Fig. 3a

Fig. 3b

zur Signalauswertung

zur Signalauswertung

Fig. 4